# EUROPEAN PATENT SPECIFICATION

(11) **EP 4 083 634 B1**
(45) Date of publication and mention of the grant of the patent: **11.09.2024**
(21) Application number: 19957638.0
(22) Date of filing: 27.12.2019
(51) Int. Cl.: G01N 35/02, G01N 35/04, G01N 35/00

(54) **AUTOMATIC SAMPLE FEEDING SYSTEM, SAMPLE ANALYSIS SYSTEM AND METHOD FOR AUTOMATIC SAMPLE FEEDING CONTROL**
AUTOMATISCHES PROBENZUFÜHRUNGSSYSTEM, PROBENANALYSESYSTEM UND VERFAHREN ZUR AUTOMATISCHEN PROBENZUFÜHRUNGSKONTROLLE
SYSTÈME D'ALIMENTATION AUTOMATIQUE D'ÉCHANTILLON, SYSTÈME D'ANALYSE D'ÉCHANTILLON ET PROCÉDÉ DE COMMANDE AUTOMATIQUE D'ALIMENTATION D'ÉCHANTILLON

(43) Date of publication of application: 02.11.2022
(73) Proprietor: Shenzhen Mindray Bio-Medical Electronics Co., Ltd., Shenzhen, Guangdong 518057 (CN); Beijing Shen Mindray Medical Electronics Technology Research Institute Co., Ltd., Beijing 100085 (CN)
(72) Inventor: LI, Aibo, Shenzhen, Guangdong 518057 (CN); YANG, Xiaonan, Shenzhen, Guangdong 518057 (CN); LI, Xin, Shenzhen, Guangdong 518057 (CN); CHAI, Liang, Shenzhen, Guangdong 518057 (CN)
(74) Representative: KIPA AB
(86) International application number: PCT/CN2019/129351
(87) International publication number: WO 2021/128312

(56) References cited:
- WO-A1-2018/163674
- CN-A- 103 748 472
- CN-A- 106 030 312
- CN-A- 107 884 589
- CN-A- 109 387 409
- CN-A- 110 244 072
- JP-A- 2003 057 251
- JP-A- H10 213 586
- JP-B2- H0 623 769
- US-A1- 2010 166 605
- US-A1- 2016 291 048
- US-A1- 2019 049 476

## Description

### TECHNICAL FIELD

The disclosure relates to an automatic sample feeding device, a sample analysis system and a method for automatic sample feeding control.

### BACKGROUND

Analyzer, such as a biochemical analyzer, an immunity analyzer and a cell analyzer, is an instrument configured to analyze and measure a sample, generally to measure chemical components, concentration and so on in the sample in a certain way after the sample reacts with a reagent added to the sample.

There are roughly three types of mechanisms configured to supply samples to the analyzer. The first type is to set a fixed sample position in the analyzer. When a sample is required to be retested, the sample is directly aspirated in the fixed sample position for retesting, which can meet the requirement for priority processing of sample retesting; however, this type of sample supply mechanisms is not suitable for large-batch sample testing. The second type of sample supply is to provide a sample backup in the analyzer, and when a sample is required to be retested, the sample is aspirated from the sample backup for retesting. This type of mechanisms is also not suitable for large-batch sample testing. The third type of sample supply is to provide a sample dispatching system outside the analyzer, which may be flexibly designed to have different dispatching capabilities according to the number of samples, and is capable of adapting to large-batch sample testing. However, current sample dispatching systems generally have a problem that retest samples and emergency samples need to be dispatched to a placement area for queuing, causing that the output efficiency of test results of the retest samples and the emergency samples is low, and the current requirement for priority processing of the retest samples and the emergency samples cannot be met. Patent applications JP H0623769 B2 and US 2019/049476 A1 provide teachings related to the technical field of the application.

### SUMMARY

The disclosure mainly provides an automatic sample feeding system, a sample analysis system and a method for automatic sample feeding control.

According to a first aspect, an automatic sample feeding device is provided as set forth in claim 1.

According to a second aspect, a sample analysis system is provided as set forth in claim 9.

According to a third aspect, a method for automatic sample feeding control is provided as set forth in claim 10.

### BRIEF DESCRIPTION OF THE DRAWINGS

FIG. 1 is a structural schematic diagram of an automatic sample feeding device according to an embodiment;
FIG. 2 is a structural schematic diagram of an automatic sample feeding device according to another embodiment;
FIG. 3 is a perspective view of a sample rack;
FIG. 4 is a structural schematic diagram of a feeding channel according to an embodiment;
FIG. 5 is a schematic structure of a reciprocating feeding mechanism according to an embodiment;
FIG. 6 is a structural schematic diagram of an automatic sample feeding device according to a further embodiment;
FIG. 7 is a schematic structure of a buffer region according to an embodiment;
FIG. 8 is a structural schematic diagram of an automatic sample feeding device according to yet a further embodiment;
FIG. 9 is a structural schematic diagram for illustrating two channel ports of a feeding channel according to an embodiment;
FIG. 10 is a schematic structure of a transfer dispatching mechanism according to an embodiment;
FIG. 11 is a structural schematic diagram of an automatic sample feeding device according to yet still further embodiment;
FIG. 12 is a structural schematic diagram of a sample analysis system according to an embodiment;
FIG. 13 is a flow chart of a method for automatic sample feeding control according to an embodiment;
FIG. 14 is a flow chart of a method for automatic sample feeding control according to another embodiment;
FIG. 15 is a flow chart of a method for automatic sample feeding control according to a further embodiment;
FIG. 16 is a flow chart of a method for automatic sample feeding control according to yet a further embodiment.

### DESCRIPTION OF THE PREFERRED EMBODIMENTS

The disclosure will be further described in detail below through specific implementations in conjunction with the accompanying drawings. Associated similar element reference numerals are used for similar elements in different implementations. In the following implementations, many details are described such that the disclosure may be better understood. However, it may be effortlessly appreciated by persons skilled in the art that some features may be omitted, or may be substituted by other elements, materials, and methods in different cases. In certain cases, some operations involved in the disclosure are not displayed or described in the specification, which is to prevent a core part of the disclosure from being obscured by too much description. Moreover, for persons skilled in the art, detailed description of the involved operations is not necessary, and the involved operations can be thoroughly understood according to the description in the specification and general technical knowledge in the art.

In addition, the characteristics, operations, or features described in the specification may be combined in any appropriate manner to form various implementations. Meanwhile, the steps or actions in the method description may also be exchanged or adjusted in order in a way that is obvious to persons skilled in the art. Therefore, the various orders in the specification and the accompanying drawings are merely for clear description of a certain embodiment and are not meant to be a necessary order unless it is otherwise stated that a certain order must be followed.

The serial numbers themselves for the components herein, for example, "first" and "second", are merely used to distinguish described objects, and do not have any sequential or technical meaning. Moreover, as used in the disclosure, "connection" or "coupling", unless otherwise stated, includes both direct and indirect connections (couplings). In addition, up, down, left, and right directions involved herein are defined with respect to the paper direction of the attached drawings.

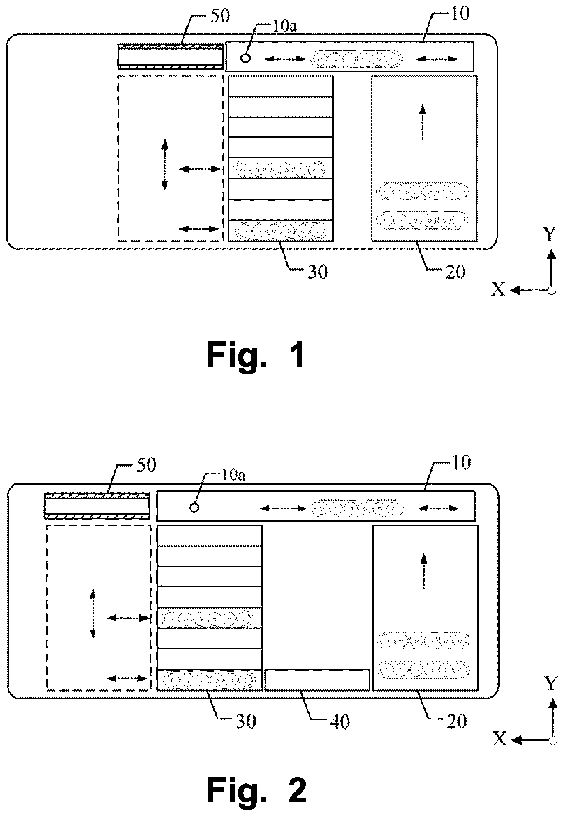

Referring to FIGS. 1 and 2, an automatic sample feeding device disclosed in some embodiments of the disclosure includes a feeding channel 10, a loading region 20, a buffer region 30, an emergency region 40, and a transfer dispatching mechanism 50. It should be noted that the automatic sample feeding device in some embodiments may not include the emergency region 40, such as the embodiment of FIG. 1, and the automatic sample feeding device in some embodiments may include the emergency region 40, such as the embodiment of FIG. 2. The components of the automatic sample feeding device are described in detail below.

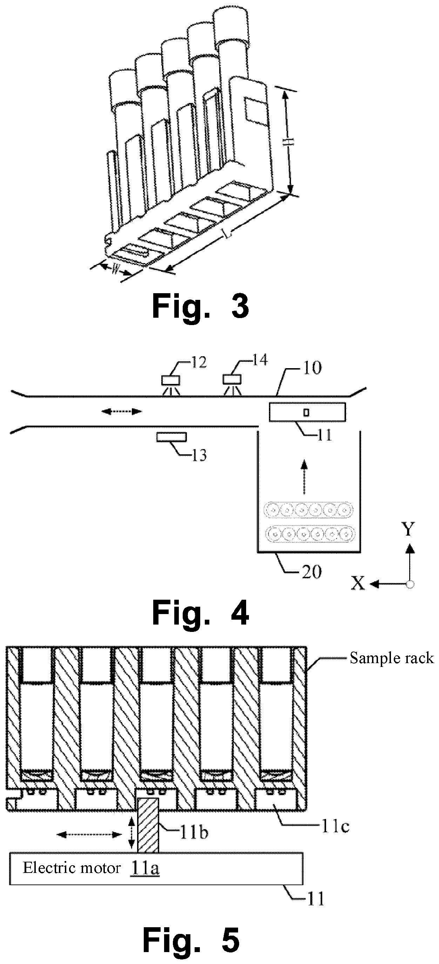

The feeding channel 10 is a place for sample aspiration of an analyzer. In some embodiments, the feeding channel 10 is provided in a first direction, such as in an X-axis direction in FIGS. 1 and 2. The feeding channel 10 is configured to support a sample rack and to allow the sample rack to move along a lengthwise direction thereof in the feeding channel. As shown in FIG. 3, it is an example of the sample rack, a length, a width and a height of the sample rack are respectively represented by L, W and H, the lengthwise direction of the sample rack is a measuring direction, in which the length L is measured, and a height direction is a measuring direction, in which the height H is measured. In some embodiments, the feeding channel 10 is further provided with a sample aspiration position, such as a sample aspiration position 10a in FIGS. 1 and 2, which is configured such that, when a sample on the sample rack is located at the sample aspiration position of the feeding channel 10, the sample on the sample rack is aspirated. In other words, when the sample on the sample rack is located at the sample aspiration position of the feeding channel 10, the analyzer aspirates the sample, and the sample rack may be constantly moved in the first direction such that samples carried by the sample rack pass through the sample aspiration position one by one, allowing the analyzer to aspirate all the samples on the sample rack respectively.

Referring to FIG. 4, in order to allow the sample rack to reciprocate in the feeding channel 10, namely, to move in a direction (such as a forward X-axis direction in the figure) same as the first direction and in a direction (such as a reverse X-axis direction in the figure) opposite to the first direction, or to move in leftward and rightward directions in the figure, a reciprocating feeding mechanism 11 is provided on the feeding channel 10. By providing the reciprocating feeding mechanism 11 on the feeding channel 10, the sample rack is bidirectionally conveyed on one track, such that sample aspiration of initial test samples, retest samples and emergency samples is completed by using one feeding channel, and meanwhile priority processing of the retest samples and the emergency samples may be achieved, overcoming the defect that the retest samples and the emergency samples need to wait in line in the prior art. In a specific embodiment, referring to FIG. 5, the reciprocating feeding mechanism 11 includes an electric motor 11a and a catch portion 11b. The bottom of the sample rack is provided with a plurality of grooves 11c. The catch portion 11b is capable of being driven by the electric motor 11a to extend and retract in the height direction of the sample rack, and to move in directions same as and opposite to the first direction; when being driven to extend out, the catch portion 11b is capable of cooperating with any one of the grooves of the sample rack, such that when the catch portion 11b is driven, the sample rack is driven to move together in the directions same as and opposite to the first direction. For example, when the catch portion 11b is driven to move in the first direction, the sample rack may be driven to move together in the first direction, and when the catch portion 11b is driven to move in the direction opposite to the first direction, the sample rack may be driven to move together in the direction opposite to the first direction.

Other components may also be provided on the feeding channel 10, such as at least one of a test tube/test tube cap presence/absence detection mechanism 12, a test tube rotation mechanism 13 and a scanner 14. The scanner 14 is configured to scan a label of a test tube for acquiring sample information. The test tube rotation mechanism 13 is a test tube rotation mechanism configured to drive the test tube to rotate, for example, when the sample rack moves in the feeding channel 10, if the scanner 14 cannot scan the test tube carried on the sample rack-possibly because a label side of the test tube does not face the scanner 14, the test tube rotation mechanism 13 drives the test tube to rotate at this time such that the label of the test tube is aligned with the scanner 14. The test tube/test tube cap presence/absence detection mechanism 12 is a test tube/test tube cap presence/absence detection mechanism configured to detect the presence/absence of a test tube and the presence/absence of a test tube cap on the test tube, and if it is detected that there is no test tube at a sample position on the sample rack, the automatic sample feeding device may output an alarm.

The above are some illustrations about the feeding channel 10.

The loading region 20 is in communication with the feeding channel 10 and is configured to support the sample rack with its lengthwise direction along the first direction and to allow the sample rack to move towards the feeding channel 10 in a second direction and then to move to the sample aspiration position in the first direction. In some embodiments herein, the first direction and the second direction are perpendicular to each other, for example, the X-axis direction in the figures is the first direction, and the Y-axis direction is the second direction. The loading region 20 may be configured for a user to place sample racks carrying samples to be tested in batches.

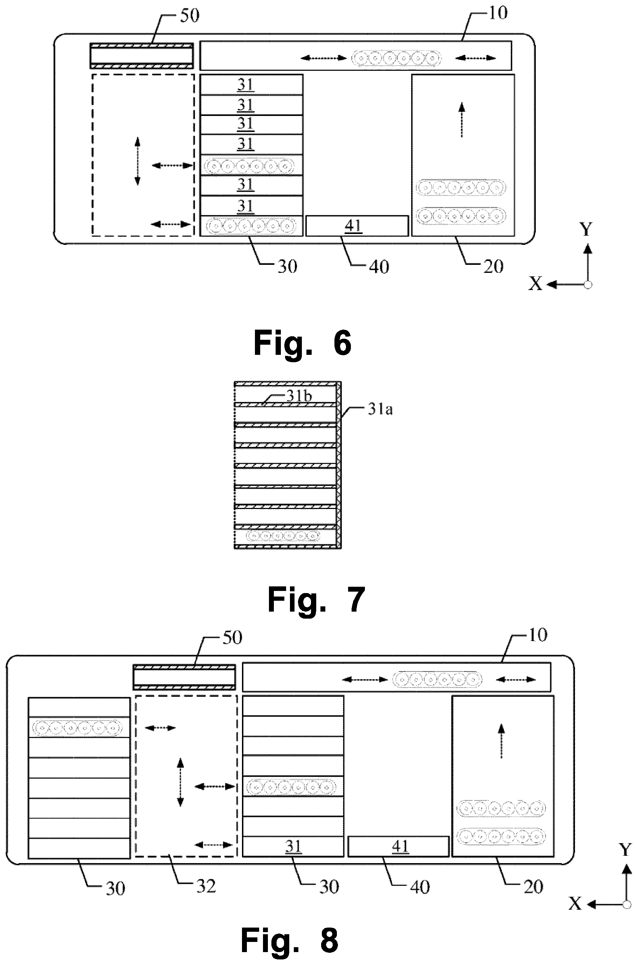

The buffer region 30 is configured to support a sample rack, which waits for a test result after sample aspiration, and/or support a sample rack storing emergency samples. In some embodiments, the buffer region 30 supports a sample rack with its lengthwise direction parallel to the first direction, allows the sample rack to move out of the buffer region 30 in a direction same as or opposite to the first direction, and allows the sample rack to move into the buffer region 30 in a direction opposite to or same as the first direction. In a specific embodiment, referring to FIG. 6, the buffer region 30 includes a plurality of buffer positions 31 sequentially provided in the second direction; and any one of the buffer positions 31 is capable of supporting a sample rack with its lengthwise direction parallel to the first direction, allows the sample rack to move out of the buffer region 30 in the direction same as or opposite to the first direction, and allows the sample rack to move into the buffer region 30 in the direction opposite to or same as the first direction. In the embodiments of FIGS. 1 and 2, the sample rack moves out of the buffer region 30 in the first direction and moves into the buffer region in the direction opposite to the first direction.

In order to enable each sample rack to be stably placed in the buffer region, in some embodiments, referring to FIG. 7, the buffer region 30 includes a baffle plate 31a and a plurality of partition plates 31b, the arrangement direction of the plurality of partition plates 31b is parallel to the first direction, the plurality of partition plates 31b are provided at intervals and are arranged in the second direction, and a buffer position 31 is formed between two adjacent partition plates 31b; and the baffle plate 31a is provided in a direction parallel to the second direction, and the baffle plate 31a is connected to one end of each of the plurality of partition plates 31b.

In the case where the total number of the buffer positions in the buffer region 30 is substantially constant, in some embodiments, one buffer region 30 may be provided, as is the case of the embodiments in FIGS. 1 and 2. In some embodiments, at least two, for example two or more, buffer regions 30 are provided, and all the buffer positions are allocated to two or more buffer regions 30 to change a design size in a certain dimension. In some embodiments, when there are multiple buffer regions 30, these buffer regions are provided in parallel. In some embodiments, when there are multiple buffer regions 30, these buffer regions are provided in parallel in the first direction. For example, FIG. 8 shows an example that the buffer regions are provided in parallel in the first direction, and it can be seen that although the length of the automatic sample feeding device in the first direction is increased, the automatic sample feeding device can be subsequently provided on one side of the analyzer, and the first direction is consistent with a lengthwise direction of the analyzer; therefore, in practical situations, there is a sufficient design space for the length of the automatic analyzer in the first direction; furthermore, by providing the buffer regions in parallel in the first direction, the length in the second direction may be decreased, while the design space in the second direction is relatively small, and in practical situations, it is desirable to decrease the length of the automatic analyzer in the second direction as much as possible. With such an arrangement, when the automatic sample feeding is assembled with the analyzer, as described above, the automatic sample feeding device is provided on one side of the analyzer, and the first direction is consistent with the lengthwise direction of the analyzer, so that the lengthwise direction (namely, the length in the first direction) of the final complete machine may be kept constant, and the longitudinal depth (namely, the length in the second direction) is not increased much due to addition of the automatic sample feeding device. In addition, with regard to the buffer region 30 on the left in FIG. 8, the sample rack is capable of moving into the buffer region 30 in the first direction and moving out of the buffer region in the direction opposite to the first direction; and with regard to the buffer region 30 on the right in FIG. 8, the sample rack is capable of moving out of the buffer region in the first direction and moving into the buffer region in the direction opposite to the first direction.

Taking an example that two buffer regions 30 are provided, in some embodiments, the two buffer regions 30 are provided apart by an intermediate region 32, and the two buffer regions 30 are symmetrically provided with the intermediate region 32 as an axis of symmetry. A length of the intermediate region 32 in the first direction is at least a length of the sample rack such that the sample rack in each of the two buffer regions 30 is capable of completely moving into the intermediate region 32 in a direction same as or opposite to the first direction, and then moving in a direction same as or opposite to the second direction. Also taking FIG. 8 as an example, with regard to the buffer region 30 on the left in FIG. 8, the sample rack is capable of moving out of the buffer region in the direction opposite to the first direction, and entering the intermediate region, and is capable of moving into the buffer region from the intermediate region in the direction same as the first direction; and with regard to the buffer region 30 on the right in FIG. 8, the sample rack is capable of moving out of the buffer region in the first direction and entering the intermediate region, and is capable of moving into the buffer region from the intermediate region in the direction opposite to the first direction. The transfer dispatching mechanism 50 moves back and forth in the intermediate region 32. The transfer dispatching mechanism 50 moves in the direction opposite to the second direction so as to dispatch the sample rack moving out of the feeding channel 10 to a corresponding buffer position 31 of the buffer region 30; and the transfer dispatching mechanism 50 moves in the direction same as the second direction to take out and dispatch samples in the corresponding buffer position 31 of the buffer region 30 to the feeding channel 10 for sample re-aspiration.

In some embodiments, the loading region 20 and the buffer region 30 are provided on a same side of the feeding channel 10, for example, provided below the feeding channel 10 in the figures.

The above are some illustrations about the buffer region 30.

The emergency region 40 is configured for a user to place a sample rack, for example, the user may place a sample rack carrying emergency samples onto the emergency region 40. In some embodiments, the emergency region 40 is at least connected to the buffer region 30, and when there is a plurality of buffer regions 30, the emergency region 40 is in communication with at least one of the buffer regions 30. The emergency region 40 is configured to allow the sample rack to move from the emergency region 40 into the buffer region 30 in communication with the emergency region 40. In some embodiments, the emergency region 40 supports the sample rack placed with its lengthwise direction along the first direction and allows the sample rack to move from the emergency region 40 to the buffer region 30 in communication therewith in the direction same as or opposite to the first direction. In some embodiments, the emergency region 40 includes at least one emergency position 41; and the at least one emergency position 41 is aligned with a buffer position 31 of the buffer region 30 and configured to support the sample rack placed with its lengthwise direction along the first direction and to allow the sample rack to move out of the emergency positions 41 in the direction same as or opposite to the first direction and enter the buffer position 31 aligned with the emergency position 41. As two examples in FIGS. 6 and 8, the sample rack in the emergency region 40 may move from the emergency region 40 to the buffer region 30 in communication therewith in the first direction, for example, move from the emergency position 41 to the buffer position 31 aligned with the emergency position 41 in the first direction. As described above, in some embodiments, the buffer region 30 includes a baffle plate 31a and partition plates 31b, it may be appreciated that when the automatic sample feeding device has the emergency region 40, the partition plates 31b do not separate the emergency region 40 from the buffer region 30, namely, the partition plates 31b do not prevent the sample rack from entering the buffer region 30 in communication with the emergency region 40 from the emergency region. For example, no partition plate 31b is provided at the buffer position 31 in communication with the emergency position 41.

In some embodiments, the emergency region 40 may also be provided in the buffer region 30. In some embodiments, the buffer position 31 of at least one buffer region 30 is provided as the emergency position for the user to place a sample rack.

In some embodiments, the emergency region 40 is provided with a button (not shown in the figures) that is triggered to generate an instruction of testing the sample rack in the emergency region 40, namely, an emergency instruction.

The above are some illustrations about the emergency region 40.

The transfer dispatching mechanism 50 is configured to dispatch the sample rack between the buffer region 30 and the feeding channel 10. In some embodiments, the transfer dispatching mechanism 50 moves the sample rack after sample aspiration out of the feeding channel 10 and then moves the sample rack into the buffer region 30 to wait for the test result, and when the test result of the sample indicates that the sample needs to be retested, the transfer dispatching mechanism moves the corresponding sample rack in the buffer region 30 out of the buffer region 30 and moves the sample rack into the feeding channel 10. In some embodiments, when an emergency instruction inputted by a user is received, the sample rack corresponding to the emergency instruction in the buffer region 30 moves out of the buffer region 30 and moves into the feeding channel 10.

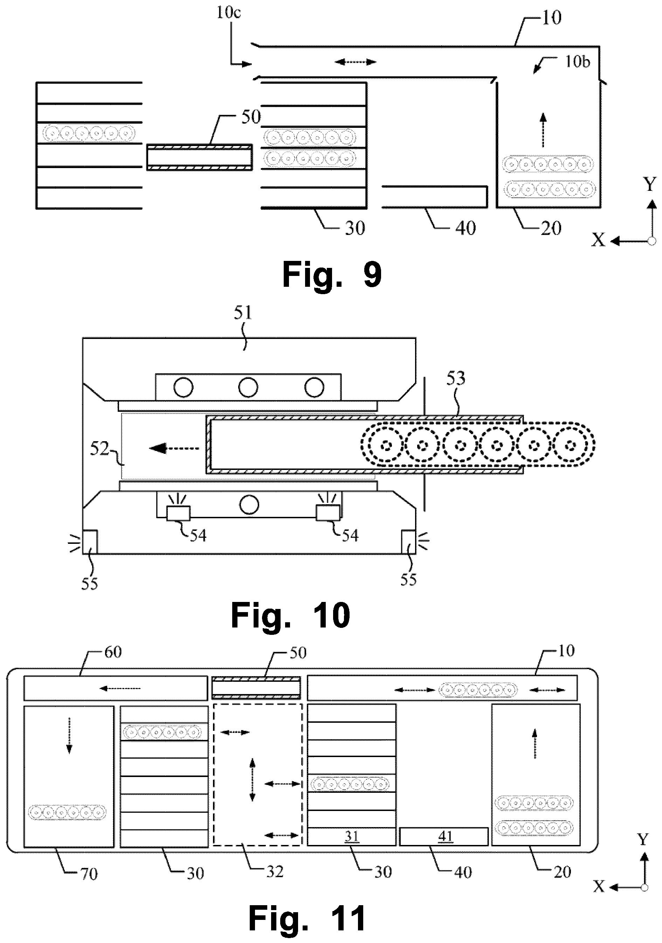

In some embodiments, the sample aspiration position of the feeding channel 10 is located between the loading region 20 and the buffer region 30; and the sample rack, which moves from the loading region 20 to the feeding channel 10, moves to the sample aspiration position in the first direction, while the sample rack, which is taken out from the buffer region 30 and moved into the feeding channel 10 by the transfer dispatching mechanism 50, moves to the sample aspiration position in a direction opposite to the first direction. The reciprocating feeding mechanism 11 of the feeding channel 10 drives the sample rack, which moves from the loading region 20 to the feeding channel 10, to move to the sample aspiration position in the first direction, and drives the sample rack, which is taken out from the buffer region 30 and moved into the feeding channel 10 by the transfer dispatching mechanism 50, to move to the sample aspiration position in the direction opposite to the first direction. In some specific embodiments, referring to FIG. 9, the feeding channel 10 includes a first channel port 10b and a second channel port 10c, the loading region 20 is located at one end of the first channel port 10b of the feeding channel, and the buffer region 30 is located at one end of the second channel port 10c of the feeding channel 10, such that the loading region 20 moves the sample rack from the first channel port 10b to the feeding channel 10, and such that the transfer dispatching mechanism 50 moves the sample rack from the buffer region 30 to the feeding channel 10 via the second channel port 10c. In some specific embodiments, the transfer dispatching mechanism 50 is configured to move the sample rack at least in the second direction such that the sample rack can move to the feeding channel 10 after moving out of the buffer region 30, and to move the sample rack at least in a direction opposite to the second direction such that the sample rack can move into the buffer region 30 after moving out of the feeding channel 10. It can be seen that by redesigning the arrangement, functions of the feeding channel 10, the loading region 20 and the buffer region 30 and sample rack access paths, the disclosure allows normal samples to be tested to enter the feeding channel 10 from the loading region 20 and to move to the sample aspiration position in the first direction to complete sample aspiration; but samples requiring retest and emergency treatment may enter the feeding channel 10 from the buffer region 30 and move to the sample aspiration position in a direction opposite to the first direction for sample aspiration, so that the samples requiring retest and emergency treatment pass through a completely different path accessing the sample aspiration position from the normal samples to be tested, allowing the samples requiring retest and emergency treatment to be preferentially treated, without waiting for other normal samples to be tested on the path accessing the sample aspiration position thereof, and without queuing with the normal samples to be tested and jumping a queue.

There are various implementation structures of the transfer dispatching mechanism 50. For example, in some embodiments, referring to FIG. 10, the transfer dispatching mechanism 50 includes an electric motor 51 and a test tube rack bracket 52; the test tube rack bracket 52 is configured to carry the sample rack with its lengthwise direction along the first direction; and the electric motor 51 is capable of driving the test tube rack bracket 52 to move in directions same as and opposite to the second direction so as to drive the sample rack carried by the test tube rack bracket 52 to move together in the directions same as and opposite to the second direction. In some embodiments, the transfer dispatching mechanism 50 further includes a test tube rack transferring mechanism 53, wherein the test tube rack transferring mechanism 53 is configured to move the sample rack with its lengthwise direction along the first direction into or out of the test tube rack bracket 52 in a direction same as or opposite to the first direction. In some embodiments, the transfer dispatching mechanism 50 further includes a first test tube rack presence/absence detection mechanism 54 and/or a second test tube rack presence/absence detection mechanism 55. The first test tube rack presence/absence detection mechanism 54 is configured to detect whether the test tube rack bracket 52 carries a sample rack. The second test tube rack presence/absence detection mechanism 55 is configured to detect whether the buffer position aligned with the test tube rack bracket 52 carries a sample rack.

The above are some illustrations about the transfer dispatching mechanism 50.

Referring to FIG. 11, the automatic sample feeding device of some embodiments of the disclosure further includes an unloading channel 60 and an unloading region 70.

The unloading channel 60 is provided in the first direction and configured to support the sample rack with its lengthwise direction along the first direction and to allow the sample rack to move from the unloading channel 60 to the unloading region 70 in a direction opposite to the second direction. In some embodiments, the unloading channel 60 is aligned with the feeding channel 10. Specifically, in some embodiments, the transfer dispatching mechanism 50 is configured to move the sample rack within the buffer region 30, which has a test result indicating that no sample needs to be retested, at least in the second direction, such that the sample rack can move out of the buffer region 30 and then move into the unloading channel 60.

The unloading region 70 is configured to support the sample rack with its lengthwise direction along the first direction and to allow the sample rack to move in a direction opposite to the second direction. In some examples, the user may take out the sample rack that completes testing or is to be recycled from the unloading region 70.

It can be seen that the sample rack carrying samples to be tested enters the feeding channel 10 from the loading region 20 and does not need to be dispatched by means of the transfer dispatching mechanism 50; but, the transfer dispatching mechanism 50 is mainly responsible for dispatching the sample rack carrying retest samples and the sample rack carrying emergency samples in the buffer region 30 to the feeding channel 10, and dispatching the sample rack that completes testing or is to be recycled to the unloading channel 60; and in terms of function, the dispatching for sample aspiration of samples to be tested entering the system for the first time is distinguished from the dispatching for special functions, namely, the dispatching for emergency treatment, the dispatching for retest and the dispatching for unloading. The dispatching for sample aspiration is realized by means of relevant mechanisms on the loading region 20 and the feeding channel 10, the dispatching for emergency treatment, the dispatching for retest and the dispatching for unloading are realized by the transfer dispatching mechanism 50, thereby obtaining a clear division of work, and obtaining a high efficiency of coordinating, handling and achieving the dispatching process in the whole test process.

In some embodiments, the unloading region 70, the buffer region 30 and the loading region 20 are all located on a same side of the feeding channel 10, for example, below the feeding channel 10 in the figures. In some embodiments, the loading region 20, the buffer region 30, and the unloading region 70 are sequentially provided in the first direction.

The above is description of the automatic sample feeding device of some embodiments of the disclosure.

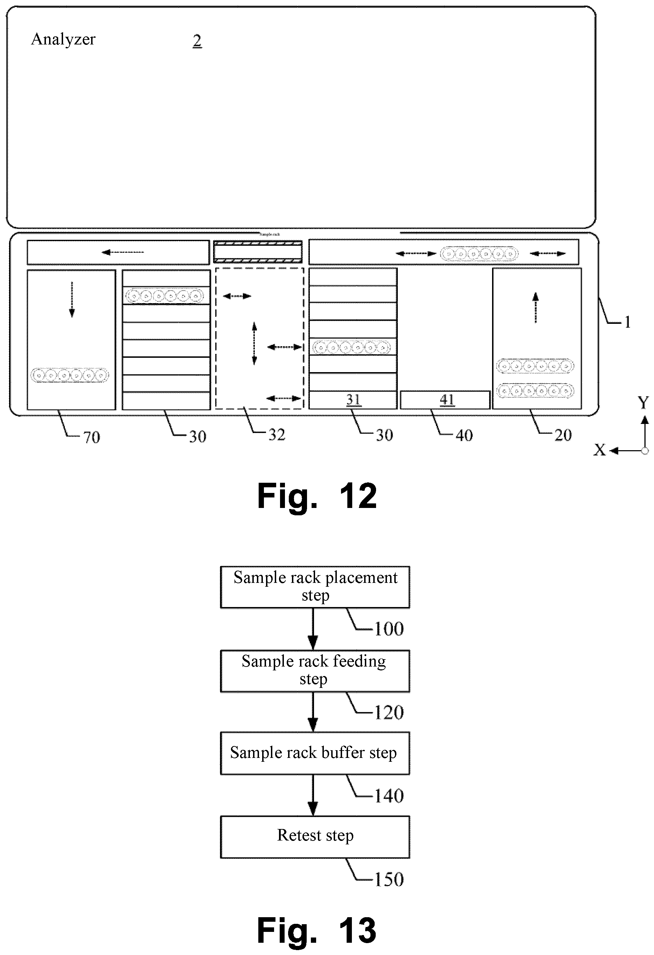

The automatic sample feeding device is configured to supply the analyzer with a sample rack carrying a sample. Referring to FIG. 12, in some embodiments of the disclosure, disclosed is a sample analysis system, including an automatic sample feeding device 1 and analyzer 2, wherein the automatic sample feeding device 1 is the automatic sample feeding device as disclosed in any one of the embodiments herein, and the analyzer 2 is configured to aspirate a sample from the sample rack supplied by the automatic sample feeding device 1 and to perform analysis. The automatic sample feeding device 1 is provided on one side of the analyzer 2, and the first direction is consistent with the lengthwise direction of the analyzer 2. With such an arrangement, the lengthwise direction (namely, the length in the first direction) of the final complete machine may be kept unchanged, and the longitudinal depth (namely, the length in the second direction) will not increase much due to addition of the automatic sample feeding device, so that it is very advantageous to arrange the final complete machine in a room, and the space of the department is effectively used. Specifically, the loading region 20 and the buffer region 30 are located on a first side of the feeding channel 10, for example, located in the lower part in the figure. When the automatic sample feeding device 1 further includes an unloading region 70, the loading region 20, the buffer region 30 and the unloading region 70 are located on the first side of the feeding channel 10, for example, located in the lower part in the figure; and the analyzer 2 is located on a second side of the automatic sample feeding device 1 opposite to the first side, for example, located in the upper part in the figure.

The flow of the automatic sample feeding device supplying the sample rack to the analyzer will be described below.

The description is made by taking FIG. 8, FIG. 11 or FIG. 12 as examples, wherein the first direction is a forward X-axis direction, the direction opposite to the first direction is a reverse X-axis direction, the second direction is a forward Y-axis direction, and the direction opposite to the second direction is a reverse Y-axis direction.

A sample rack carrying samples to be tested in the loading region 20 is moved in the second direction to enter the feeding channel 10, and then moved in the feeding channel 10 in the first direction to pass through the sample aspiration position, the analyzer performs sample aspiration on the sample located at the sample aspiration position, and after all the samples on the sample rack are aspirated, the sample rack continues to move in the first direction to enter the transfer dispatching mechanism 50 from the feeding channel 10, and after receiving the sample rack, the transfer dispatching mechanism drives the sample rack to move in the direction opposite to the second direction and then stops after aligning with an empty buffer position 31. If the empty buffer position 31 is within the left buffer region 30 in the figure, the sample rack is moved in the first direction to enter the left buffer region 30, and if the empty buffer position 31 is within the right buffer region 30 in the figure, the sample rack is moved in the direction opposite to the first direction to enter the right buffer region 30. The purpose of the sample rack entering the buffer region 30 is to wait for test results of the samples carried thereby.

When the test result of a sample indicates that the sample needs to be retested, the corresponding sample rack in the buffer region 30 is moved out of the buffer region 30 and moved into the feeding channel 10, and specifically, the transfer dispatching mechanism 50 moves and aligns with the buffer position 31 where the sample rack is located; if the sample rack is located in the left buffer region 30 in the figure, the sample rack is moved in the direction opposite to the first direction to enter the transfer dispatching mechanism 50; if the sample rack is located in the right buffer region 30 in the figure, the sample rack is moved in the first direction to enter the transfer dispatching mechanism 50; after receiving the sample rack, the transfer dispatching mechanism 50 moves in the second direction to align with the feeding channel 10, then moves the sample rack in the direction opposite to the first direction to enter the feeding channel 10 such that the sample to be retested passes through the sample aspiration position, and the analyzer aspirates the sample to be retested; after all samples to be retested on the sample rack are aspirated, the sample rack is moved in the first direction to enter the transfer dispatching mechanism 50 from the feeding channel 10, and the transfer dispatching mechanism 50 then moves in the direction opposite to the second direction to re-dispatch the sample rack back to the buffer region 30. In some test modes, a sample only needs to be retested once, namely, after being aspirated for the first time, the sample waits for a test result in the buffer region; if the test result indicates that a retest is needed, the sample is retested, and then the sample does not need to wait for a test result of retesting again, but is directly dispatched, for example, to the unloading region; in this mode, after all samples to be retested on the sample rack are aspirated, the sample rack is moved in the first direction to enter the transfer dispatching mechanism 50 from the feeding channel 10, then continues to enter the unloading channel 60 from the transfer dispatching mechanism 50 in the first direction, and eventually enters the unloading region 70 through the unloading channel 60 in the direction opposite to the second direction. During this process, it is possible to require the sample rack to move a distance along the unloading channel 60 in the first direction and then enter the unloading region 70 in the direction opposite to the second direction.

When the test results of all the samples on the sample rack in the buffer region 30 indicate that the corresponding samples do not need to be retested, the corresponding sample rack in the buffer region 30 is moved out from the buffer region 30 and is finally moved into the unloading region 70. The transfer dispatching mechanism 50 moves and aligns with the buffer position 31 where the sample rack is located; if the sample rack is located in the left buffer region 30 in the figure, the sample rack is moved in the direction opposite to the first direction to enter the transfer dispatching mechanism 50; if the sample rack is located in the right buffer region 30 in the figure, the sample rack is moved in the first direction to enter the transfer dispatching mechanism 50; and after receiving the sample rack, the transfer dispatching mechanism 50 moves in the second direction to align with the unloading channel 60, and the sample rack is moved from the transfer dispatching mechanism 50 to the unloading channel 60 in the first direction, and finally enters the unloading region 70 in the direction opposite to the second direction through the unloading channel 60. During this process, it is possible to require the sample rack to move a distance in the first direction along the unloading channel 60 and then enter the unloading region 70 in the direction opposite to the second direction.

The dispatching and testing process of a sample rack carrying emergency samples is also similar, and after a user places the sample rack in the emergency region 40, the sample rack is moved from the emergency region 40 in the first direction to enter the buffer region 30 in communication therewith; of course, for embodiments in which the emergency region 40 is provided within the buffer region 30, for example, one buffer position 31 in the buffer region 30 is provided as the emergency position 41, the sample rack carrying the emergency samples itself is already in the buffer region 30. The sample rack is then moved out from the buffer region 30 and moved into the feeding channel 10, and specifically, the transfer dispatching mechanism 50 moves and aligns with the buffer position 31 where the sample rack is located. It is shown in the figure that the sample rack is located in the right buffer region 30 in the figure, and therefore the sample rack is moved in the first direction to enter the transfer dispatching mechanism 50; and after receiving the sample rack, the transfer dispatching mechanism 50 moves in the second direction to align with the feeding channel 10, and then the sample rack is moved in the direction opposite to the first direction to enter the feeding channel 10, such that the samples pass through the sample aspiration position one by one, and the analyzer aspirates each sample of the sample rack; and after each sample of the sample rack is aspirated, the sample rack is moved in the first direction to enter the transfer dispatching mechanism 50 from the feeding channel 10, and the transfer dispatching mechanism 50 then moves in the direction opposite to the second direction to re-dispatch the sample rack back to the buffer region 30. The purpose of the sample rack entering the buffer region 30 at the moment is to wait for test results of the samples carried thereby. When the test result of a sample on the sample rack carrying the emergency samples indicates that the sample needs to be retested, the sample rack needs to enter the feeding channel 10 again for retesting of the corresponding sample, and the specific dispatching process may refer to in the above description, which will not be repeatedly described herein; and similarly, when the test results for all the samples on the sample rack carrying emergency samples indicate that no corresponding sample needs to be retested, the sample rack is moved out from the buffer region 30 and is eventually moved into the unloading region 70, and the specific dispatching process may refer to in the above description, which will not be repeatedly described herein.

In some embodiments of the disclosure, further disclosed is a method for automatic sample feeding control that may be applied to the automatic sample feeding device disclosed in any one of the embodiments herein.

Referring to FIG. 13, the method for automatic sample feeding control in some embodiments includes the following steps:
Step 100 (namely, sample rack placement step), controlling a sample rack to move from the loading region 20 to the feeding channel 10 in the second direction;
Step 120 (namely, sample rack feeding step), controlling the sample rack to move in the first direction along the feeding channel 10 to the sample aspiration position located on the feeding channel 10 for sample aspiration;
Step 140 (namely, sample rack buffer step), controlling the transfer dispatching mechanism 50 to move the sample rack, which moves out of the feeding channel 10 after sample aspiration, to the buffer region 30 in the direction opposite to the second direction, and driving the sample rack to move into the buffer region 30 in the direction same as or opposite to the first direction so as to wait for a test result.

Taking FIG. 8, FIG. 11 or FIG. 12 as an example for illustration, after all the samples on the sample rack are aspirated, the sample rack continues to move in the first direction to enter the transfer dispatching mechanism 50 from the feeding channel 10, and after receiving the sample rack, the transfer dispatching mechanism drives the sample rack to move in the direction opposite to the second direction and then stops after aligning with an empty buffer position 31. If the empty buffer position 31 is within the left buffer region 30 in the figure, the sample rack is moved in the first direction to enter the left buffer region 30, and if the empty buffer position 31 is in the right buffer region 30 in the figure, the sample rack is moved in the direction opposite to the first direction to enter the right buffer region 30. The purpose of the sample rack entering the buffer region 30 is to wait for test results of the samples carried thereby.

Step 150, namely, retest step, when the test result of a sample indicates that the sample needs to be retested, controlling the transfer dispatching mechanism to take out the sample rack corresponding to a retest instruction in the buffer region in the direction opposite to or same as the first direction and then dispatch the sample rack to the feeding channel in the second direction, so as to move to the sample aspiration position in the direction opposite to the first direction along the feeding channel for sample aspiration. It should be noted that the retest instruction may be automatically generated by the sample analysis system, or the analyzer, or the automatic sample feeding device when it is determined that there is a sample that needs to be retested, or may be issued by a user by means of a mouse or a keyboard, etc., for example, after the user sees the test results on a display interface, a sample on a certain sample rack is manually designated for retesting.

With reference to FIG. 8, FIG. 11 or FIG. 12, when the test result of a sample indicates that the sample needs to be retested, the corresponding sample rack in the buffer region 30 is moved out of the buffer region 30 and moved into the feeding channel 10, and specifically, the transfer dispatching mechanism 50 moves and aligns with the buffer position 31 where the sample rack is located; if the sample rack is located in the left buffer region 30 in the figure, the sample rack is moved in the direction opposite to the first direction to enter the transfer dispatching mechanism 50; if the sample rack is located in the right buffer region 30 in the figure, the sample rack is moved in the first direction to enter the transfer dispatching mechanism 50; and after receiving the sample rack, the transfer dispatching mechanism 50 moves in the second direction to align with the feeding channel 10, and the sample rack is then moved in the direction opposite to the first direction to enter the feeding channel 10 such that the sample to be retested passes through the sample aspiration position, and the analyzer aspirates the sample to be retested. After all samples to be retested on the sample rack are aspirated, the sample rack is moved in the first direction to enter the transfer dispatching mechanism 50 from the feeding channel 10, and the transfer dispatching mechanism 50 then moves in the direction opposite to the second direction, so as to re-dispatched the sample rack back to the buffer region 30. In some test modes, a sample only need to be retested once, namely, after being aspirated for the first time, the sample waits for the test result in the buffer region; if the test result indicates that a retest is needed, the sample is retested, and then the sample does not need to wait for a test result of retesting again, but is directly dispatched, for example, to the unloading region; and in this mode, after all samples to be retested on the sample rack are aspirated, the sample rack is moved in the first direction to enter the transfer dispatching mechanism 50 from the feeding channel 10, then continues to enter the unloading channel 60 from the transfer dispatching mechanism 50 in the first direction, and eventually enters the unloading region 70 through the unloading channel 60 in the direction opposite to the second direction. During this process, it is possible to require to move the sample rack a distance along the unloading channel 60 in the first direction and then enter the unloading region 70 in the direction opposite to the second direction.

In some cases, when the sample rack needs to enter the feeding channel 10 from the buffer region 30 for retesting, it is possible that there is already a sample rack on the feeding channel 10, and some avoidance strategies need to be taken to deal with this relatively complex situation.

In some embodiments, the retest step 150 may include: when the test result of the sample indicates that the sample needs to be retested, controlling a sample rack located at the sample aspiration position to move out along the feeding channel, which means that there is already a sample rack in the feeding channel 10 at this time, and the sample on the sample rack is rightly located at the sample aspiration position, so that the samples on the sample rack being fed can be all aspirated, and then controlling the transfer dispatching mechanism 50 to dispatch the sample rack to the buffer region 30 to wait for test results; and then, controlling the transfer dispatching mechanism 50 to take out the sample rack corresponding to the retest instruction in the buffer region in the direction same as or opposite to the first direction and then dispatch the sample rack to the feeding channel in the direction opposite to the second direction so as to move to the sample aspiration position along the feeding channel in the direction opposite to the first direction for sample aspiration.

In some embodiments, the retest step 150 may include: when the test result of the sample indicates that the sample needs to be retested, controlling a sample rack located at the sample aspiration position to move out along the feeding channel in the direction opposite to the first direction, which means that there is already a sample rack in the feeding channel 10 at this time, and the sample on the sample rack is rightly located at the sample aspiration position, so that the sample rack can be moved in the direction opposite to the first direction to make room for the sample aspiration position; then controlling the transfer dispatching mechanism 50 to take out the sample rack corresponding to the retest instruction in the buffer region in the direction same as or opposite to the first direction and then dispatch the sample rack to the feeding channel in the direction opposite to the second direction so as to move to the sample aspiration position along the feeding channel in the direction opposite to the first direction for sample aspiration.

It can be seen that the avoidance strategies are achieved by controlling the sample rack in the feeding channel to move for avoidance. Thus, in some embodiments, the retest step 150 may include: when it is determined that there is a sample rack in the feeding channel, controlling the sample rack in the feeding channel to move for avoidance.

In some specific embodiments, it may be handled according to whether currently one or more sample racks is in the feeding channel 10. In some embodiments, controlling the sample rack in the feeding channel to move for avoidance includes: when it is determined that there is only one sample rack in the feeding channel 10, controlling the sample rack to move in the feeding channel for avoidance, for example, firstly controlling the sample rack to move to the sample aspiration position such that each sample on the sample rack is aspirated, and then controlling the sample rack to move in the feeding channel for avoidance, for example, controlling the transfer dispatching mechanism 50 to dispatch the sample rack after sample aspiration to the buffer region 30 to wait for test results, or controlling the sample rack to move in the direction opposite to the first direction to make room for the sample aspiration position. In some embodiments, controlling the sample rack in the feeding channel to move for avoidance includes: when it is determined that there are a plurality of sample racks in the feeding channel 10, controlling the sample rack closest to the sample aspiration position to move to the sample aspiration position such that each sample on the sample rack is aspirated, then controlling the sample rack after sample aspiration to move out of the feeding channel, for example, controlling the transfer dispatching mechanism 50 to dispatch the sample rack after sample aspiration to the buffer region 30 to wait for test results, and controlling other sample racks in the feeding channel to move in the feeding channel for avoidance, for example, controlling these other sample racks to move in the feeding channel 10 in the direction opposite to the first direction so as to make room for the sample aspiration position, or even controlling the sample racks to reenter the loading region 20.

In some specific embodiments, it may also be handled according to whether or not the feeding channel 10 is fully loaded. In some embodiments, controlling the sample rack in the feeding channel to move for avoidance includes: when it is determined that the feeding channel 10 is not fully loaded, controlling each sample rack to move in the feeding channel 10 for avoidance, for example, controlling each sample rack to move in the feeding channel 10 in the direction opposite to the first direction to make room for the sample aspiration position, or even controlling each sample rack to reenter the loading region 20. In some embodiments, controlling the sample rack in the feeding channel to move for avoidance includes: when it is determined that the feeding channel is fully loaded, controlling the sample rack closest to the sample aspiration position to move to the sample aspiration position such that each sample on the sample rack is aspirated, then controlling the sample rack after sample aspiration to move out of the feeding channel, for example, controlling the transfer dispatching mechanism 50 to dispatch the sample rack after sample aspiration to the buffer region 30 to wait for test results, and controlling other sample racks in the feeding channel to move on the feeding channel for avoidance, for example, controlling these other sample racks to move in the feeding channel 10 in the direction opposite to the first direction so as to make room for the sample aspiration position, or even controlling the sample racks to reenter the loading region 20.

With the above avoidance strategies and specific methods, it is possible to preferentially process the samples that need to be retested, so that the time required for obtaining final sample test results meets the requirement of the department.

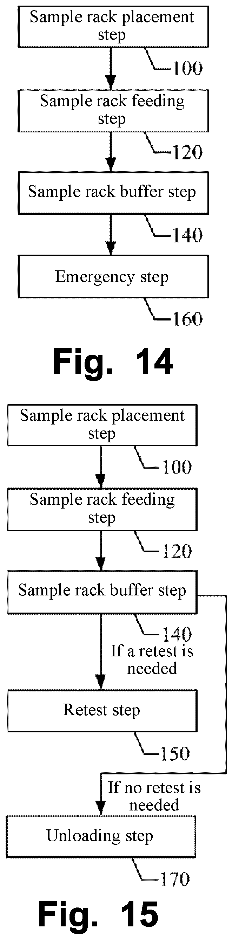

Referring to FIG. 14, the method for automatic sample feeding control in some embodiments includes the following steps:
Step 100 (namely, sample rack placement step), controlling a sample rack to move from the loading region 20 to the feeding channel 10 in the second direction;
Step 120 (namely, sample rack feeding step), controlling the sample rack to move in the first direction along the feeding channel 10 to the sample aspiration position located on the feeding channel 10 for sample aspiration;
Step 140 (namely, sample rack buffer step), controlling the transfer dispatching mechanism 50 to move the sample rack, which is moved out of the feeding channel 10 after sample aspiration, to the buffer region 30 in the direction opposite to the second direction, and driving the sample rack to move into the buffer region 30 in the direction same as or opposite to the first direction;
Step 160 (namely, emergency step), controlling, in response to an emergency instruction inputted by the user, the transfer dispatching mechanism to move the sample rack out of the buffer region 30 in the direction same as or opposite to the first direction from the buffer region 30 and move the sample rack to the feeding channel 10 in the second direction, such that the sample rack is moved to the sample aspiration position along the feeding channel 10 in the direction opposite to the first direction.

In some examples, the emergency region 40 is a region in communication with the buffer region 30, then the emergency step 160 further includes: controlling, in response to an emergency instruction inputted by the user, the sample rack located within the emergency region 40 to move from the emergency region 40 to the buffer region 30 in communication with the emergency region in the direction same as or opposite to the first direction. Specifically, step 160 includes a first emergency step: controlling, in response to an emergency instruction inputted by a user, the sample rack located in the emergency region 40 to move from the emergency region 40 to the buffer region 30 in communication with the emergency region in the direction same as or opposite to the first direction; controlling the sample rack to move out of the buffer region 30 in the direction same as or opposite to the first direction from the buffer region 30; controlling the sample rack moved out of the buffer region 30 to move in the second direction; and controlling the sample rack to move into the feeding channel 10 and to move to the sample aspiration position along the feeding channel 10 in the direction opposite to the first direction for sample aspiration.

In some examples, if the emergency region 40 is provided in the buffer region 30, or a buffer position 31 is provided as the emergency position 41, the emergency step 160 includes: directly controlling, in response to an emergency instruction inputted by the user, the sample rack at the emergency position 41 in the buffer region 30 to move out of the buffer region 30 in the direction same as or opposite to the first direction from the buffer region 30 and to move to the feeding channel 10 in the second direction. Specifically, step 160 includes a second emergency step: controlling, in response to an emergency instruction input by the user, the sample rack at the emergency position 41 in the buffer region 40 to move out of the buffer region 30 in the direction same as or opposite to the first direction; controlling the sample rack moved out of the buffer region 30 to move in the second direction; and controlling the sample rack to move into the feeding channel 10 and to move to the sample aspiration position along the feeding channel in the direction opposite to the first direction for sample aspiration.

In some cases, when a sample rack carrying emergency samples needs to enter the feeding channel 10 from the buffer region 30 for testing, it is possible that there is already a sample rack in the feeding channel 10, and some avoidance strategies need to be taken to deal with this relatively complex situation.

In some embodiments, the emergency step 160 further includes: when it is determined that there is a sample rack in the feeding channel 10, controlling the sample rack in the feeding channel to move for avoidance.

In some specific embodiments, it may be handled according to whether currently one or more sample racks is in the feeding channel 10. In some embodiments, controlling the sample rack in the feeding channel to move for avoidance includes: when it is determined that there is only one sample rack in the feeding channel 10, controlling the sample rack to move in the feeding channel for avoidance, for example, firstly controlling the sample rack to move to the sample aspiration position such that each sample on the sample rack is aspirated, and then controlling the sample rack to move in the feeding channel for avoidance, for example, controlling the transfer dispatching mechanism 50 to dispatch the sample rack after sample aspiration to the buffer region 30 to wait for test results, or controlling the sample rack to move in the direction opposite to the first direction to make room for the sample aspiration position. In some embodiments, controlling the sample rack on the feeding channel to move for avoidance includes: when it is determined that there are a plurality of sample racks in the feeding channel 10, controlling the sample rack closest to the sample aspiration position to move to the sample aspiration position such that each sample on the sample rack is aspirated, then controlling the sample rack after sample aspiration to move out of the feeding channel, for example, controlling the transfer dispatching mechanism 50 to dispatch the sample rack after sample aspiration to the buffer region 30 to wait for test results, and controlling other sample racks in the feeding channel to move in the feeding channel for avoidance, for example, controlling these other sample racks to move in the feeding channel 10 in the direction opposite to the first direction so as to make room for the sample aspiration position, or even controlling the sample racks to reenter the loading region 20.

In some specific embodiments, it may also be handled according to whether or not the feeding channel 10 is fully loaded. In some embodiments, controlling the sample rack in the feeding channel to move for avoidance includes: when it is determined that the feeding channel 10 is not fully loaded, controlling each sample rack to move in the feeding channel 10 for avoidance, for example, controlling each sample rack to move in the feeding channel 10 in the direction opposite to the first direction to make room for the sample aspiration position, or even controlling the sample racks to reenter the loading region 20. In some embodiments, controlling the sample rack in the feeding channel to move for avoidance includes: when it is determined that the feeding channel is fully loaded, controlling the sample rack closest to the sample aspiration position to move to the sample aspiration position such that each sample on the sample rack is aspirated, then controlling the sample rack after sample aspiration to move out of the feeding channel, for example, controlling the transfer dispatching mechanism 50 to dispatch the sample rack after sample aspiration to the buffer region 30 to wait for test results, and controlling other sample racks in the feeding channel to move in the feeding channel for avoidance, for example, controlling these other sample racks to move in the feeding channel 10 in the direction opposite to the first direction so as to make room for the sample aspiration position, or even controlling the sample racks to reenter the loading region 20.

With some avoidance strategies and specific methods above, it is possible to preferentially process samples requiring emergency treatment, meeting the requirement of the time required for obtaining sample test results of emergency samples.

After all the samples on the sample rack carrying the emergency samples are aspirated, the sample rack after sample aspiration passing the sample aspiration position is controlled to move out of the feeding channel 10 in the first direction; and the transfer dispatching mechanism 50 is then controlled to move the sample rack, which is moved out from the feeding channel 10, in the direction opposite to the second direction and move the sample rack to the buffer region 30 in the direction same as or opposite to the first direction to wait for test results. When the test result of an emergency sample indicates that the emergency sample needs to be retested, the retest step is performed, and the corresponding sample rack is dispatched for retesting. The specific flow is described above and is not repeatedly described herein.

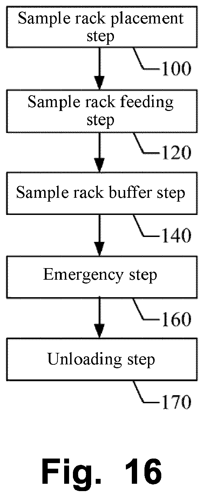

Referring to FIGS. 15 and 16, the method for automatic sample feeding control in some embodiments may further include step 170 (namely, unloading step): when the test result of each sample on a sample rack in the buffer region 30 indicates that the corresponding sample does not need to be retested, controlling the sample rack to move out of the buffer region 30 in the direction same as or opposite to the first direction from the buffer region 30, controlling the sample rack moved out of the buffer region 30 to move in the direction same as the second direction, and then controlling the sample rack to move into the unloading channel 60 and to move from the unloading channel 60 to the unloading region 70 in the direction opposite to the second direction. In this process, it is possible to require the sample rack to move a distance along the unloading channel 60 in the first direction and then enter the unloading region 70 in the direction opposite to the second direction.

The above illustrates the sample analysis system, the analyzer, the automatic sample feeding device and the automatic sample feeding control method disclosed in the disclosure. The sample analysis system, the analyzer and the automatic sample feeding device of the disclosure are compact in structure, and may achieve conventional sample feeding, rapid emergency sample feeding and rapid retesting. The automatic sample feeding device may be independent of the analyzer and may be removed when the analyzer needs to be connected to a pipeline system. Furthermore, when the analyzer needs to test a larger batch of samples compared to the designed capacity, it is also possible to add an expansion module on an external portion, and the expansion module conveys a sample rack carrying samples to be tested to the loading region 20 by means of a track, and may also transfer a sample rack out of the unloading region 70 by means of the track after the test is completed. Moreover, the automatic sample feeding device may also supply samples to a plurality of analyzers by providing a plurality of feeding channels 10 in the first direction and the buffer regions 30 and the transfer dispatching mechanisms 50 matching the feeding channels 10 (each feeding channel 10 supplies samples to one analyzer), thereby achieving cascade connection of the plurality of analyzers.

The description has been made with reference to various exemplary embodiments herein. However, persons skilled in the art would have appreciated that changes and modifications could have been made to the exemplary embodiments without departing from the scope herein. For example, various operation steps and assemblies for executing operation steps may be implemented in different ways according to a specific application or considering any number of cost functions associated with the operation of the system (for example, one or more steps may be deleted, modified or incorporated into other steps).

In the above embodiments, the disclosure may be implemented in whole or in part by software, hardware, firmware, or any combination thereof. In addition, as understood by persons skilled in the art, the disclosure may be reflected in a computer program product on a computer-readable storage medium that is pre-installed with computer-readable program code. Any tangible, non-transitory computer-readable storage medium can be used, including magnetic storage devices (hard disks, floppy disks, etc.), optical storage devices (CD-ROM, DVD, Blu Ray disks, etc.), flash memories, and/or the like. These computer program instructions can be loaded onto a general-purpose computer, a dedicated computer, or other programmable data processing apparatus to form a machine, such that these instructions executed on a computer or other programmable data processing apparatus can generate an apparatus that implements a specified function. These computer program instructions can also be stored in a computer-readable memory that can instruct a computer or other programmable data processing apparatus to operate in a specific manner, such that the instructions stored in the computer-readable memory can form a manufactured product, including an implementation apparatus that implements a specified function. The computer program instructions may also be loaded onto a computer or other programmable data processing apparatus, such that a series of operating steps are executed on the computer or other programmable device to produce a computer-implemented process, such that the instructions executed on the computer or other programmable device can provide steps for implementing a specified function.

Although the disclosure has been shown in various embodiments, many modifications of structures, arrangements, ratios, elements, materials, and components that are particularly suitable for specific environments and operating requirements can be made without departing from the scope of the disclosure.

The above specific description has been described with reference to various embodiments. However, persons skilled in the art would have appreciated that various modifications and changes could have been made without departing from the scope of the disclosure. Therefore, consideration of the disclosure will be in an illustrative rather than a restrictive sense, and all such modifications will be included within the scope thereof. Likewise, the advantages of various embodiments, other advantages, and the solutions to problems have been described above. However, the benefits, advantages, solutions to problems, and any elements that can produce these, or solutions that make them more explicit, should not be interpreted as critical, necessary, or essential. The term "comprise", "include", and any other variants thereof used herein are non-exclusive, so that the process, method, document, or device that includes a list of elements includes not only these elements, but also other elements that are not explicitly listed or do not belong to the process, method, system, document, or device. Furthermore, the term "coupling" and any other variations thereof used herein refer to physical connection, electrical connection, magnetic connection, optical connection, communication connection, functional connection, and/or any other connection.

Persons skilled in the art will recognize that many changes may be made to the details of the above-described embodiments without departing from the scope of the disclosure. Therefore, the scope of the disclosure should be determined only by the claims.

## Claims

1. An automatic sample feeding device, wherein the automatic sample feeding device comprises:
a feeding channel (10) provided in a first direction and configured to support a sample rack, wherein the feeding channel (10) is provided with a reciprocating feeding mechanism (11) configured to move the sample rack in the feeding channel (10) along a lengthwise direction thereof; wherein the feeding channel (10) is further provided with a sample aspiration position (10a) for aspirating a sample in the sample rack;
a loading region (20) in communication with the feeding channel (10) and configured to support the sample rack with its lengthwise direction along the first direction and to move the sample rack towards the feeding channel (10) in a second direction;
at least one buffer region (30) configured to support the sample rack after sample aspiration, and/or support a sample rack storing an emergency sample; and
a transfer dispatching mechanism (50) configured to dispatch the sample rack between the at least one buffer region (30) and the feeding channel (10), wherein the transfer dispatching mechanism (50) is configured to: move the sample rack after sample aspiration from the feeding channel (10) into the at least one buffer region (30) to wait for a test result; move a sample rack in the at least one buffer region (30) from the at least one buffer region (30) into the feeding channel (10) when the sample in the sample rack needs to be retested; or move a sample rack corresponding to an emergency instruction in the at least one buffer region (30) from the at least one buffer region (30) into the feeding channel (10) when the emergency instruction inputted by a user is received,
wherein the sample aspiration position (10a) of the feeding channel (10) is located at a position between the loading region (20) and the at least one buffer region (30); and the reciprocating feeding mechanism (11) is configured to: drive the sample rack, which moves from the loading region (20) into the feeding channel (10), to move to the sample aspiration position (10a) in the first direction; and drive the sample rack, which is taken out by the transfer dispatching mechanism (50) from the at least one buffer region (30) into the feeding channel (10), to move to the sample aspiration position (10a) in a direction opposite to the first direction, to bidirectionally convey the sample rack on the feeding channel (10).

2. The automatic sample feeding device of claim 1, wherein the at least one buffer region (30) comprises at least two buffer regions (30) provided in parallel, and the at least two buffer regions (30) are preferably provided in parallel in the first direction.

3. The automatic sample feeding device of claim 2, wherein the at least buffer region (30) comprises two buffer regions, the two buffer regions (30) are provided apart by an intermediate region (32) and are axisymmetrically provided relative to the intermediate region (32) as an axis of symmetry, and a length of the intermediate region (32) in the first direction is at least a length of the sample rack, the transfer dispatching mechanism (50) is further configured to: completely move the sample rack in each of the two buffer regions (30) into the intermediate region (32) in a direction same as or opposite to the first direction; and move the sample rack in the intermediate region (32) in the second direction.

4. The automatic sample feeding device of any one of claims 1 to 3, wherein the transfer dispatching mechanism (50) is further configured to move the sample rack from the at least one buffer region (30) to the feeding channel (10) at least in the second direction, and to move the sample rack from the feeding channel (10) to the at least one buffer region (30) at least in a direction opposite to the second direction.

5. The automatic sample feeding device of any one of claims 1 to 4, wherein the automatic sample feeding device further comprises an emergency region (40) configured for the user to place a sample rack carrying an emergency sample, wherein the emergency region (40) is at least in communication with one of the at least one buffer region (30) and is configured to move the sample rack from the emergency region (40) to the at least one buffer region (30) in communication with the emergency region (40).

6. The automatic sample feeding device of any one of claims 1 to 5, wherein the loading region (20) and the at least one buffer region (30) are located on a same side of the feeding channel (10).

7. The automatic sample feeding device of any one of claims 1 to 6, wherein the automatic sample feeding device further comprises an unloading channel (60) and an unloading region (70);
wherein the unloading region (70) is configured to support the sample rack with its lengthwise direction along the first direction and to move the sample rack in a direction opposite to the second direction;
wherein the unloading channel (60) is provided in the first direction and configured to support the sample rack with its lengthwise direction along the first direction and to move the sample rack from the unloading channel (60) to the unloading region (70) in a direction opposite to the second direction; and
wherein the unloading region (70), the at least one buffer region (30) and the loading region (20) are all located on a same side of the feeding channel (10).

8. The automatic sample feeding device of any one of claims 1 to 7, wherein the loading region (20), the at least one buffer region (30), and the unloading region (70) are sequentially provided in the first direction.

9. A sample analysis system, wherein the sample analysis system comprises: an automatic sample feeding device according to any of claims 1-8, and an analyzer for aspirating a sample from a sample rack supplied by the automatic sample feeding device and performing analysis,
wherein the automatic sample feeding device is provided on one side of the analyzer, and the first direction is consistent with a lengthwise direction of the analyzer; and the loading region (20) and the at least one buffer region (30) are located on a first side of the feeding channel (10), and the analyzer is located on a second side opposite to the first side of the automatic sample feeding device.

10. A method for automatic sample feeding control, wherein the method comprises:
a sample rack placement step (100): controlling a sample rack to move from a loading region to a feeding channel in a second direction;
a sample rack feeding step (120): controlling the sample rack to move in a first direction along the feeding channel to a sample aspiration position located on the feeding channel for sample aspiration;
a sample rack buffer step (140): controlling a transfer dispatching mechanism to move the sample rack, which moves out of the feeding channel after the sample aspiration, to a buffer region in a direction opposite to the second direction, and driving the sample rack to move into the buffer region in a direction same as or opposite to the first direction so as to wait for a test result; and
a retest step (150): when the test result of a sample indicates that the sample needs to be retested, controlling the transfer dispatching mechanism to take out the sample rack corresponding to a retest instruction in the buffer region in a direction opposite to or same as the first direction and then dispatch the sample rack to the feeding channel in the second direction, and moving the sample rack to the sample aspiration position in a direction opposite to the first direction along the feeding channel for sample aspiration, to bidirectionally convey the sample rack on the feeding channel.

11. The method of claim 10, wherein the retest step (150) further comprises:
when the test result of the sample indicates that the sample needs to be retested, controlling a sample rack located at the sample aspiration position to move out along the feeding channel, then controlling the transfer dispatching mechanism to take out the sample rack corresponding to the retest instruction in the buffer region in the direction same as or opposite to the first direction and then dispatch the sample rack to the feeding channel in a direction opposite to the second direction, so as to move to the sample aspiration position in the direction opposite to the first direction along the feeding channel for sample aspiration.

12. The method of claim 10, wherein the retest step (150) further comprises:
when the test result of the sample indicates that the sample needs to be retested, controlling a sample rack located at the sample aspiration position to move out along the feeding channel in a direction opposite to the first direction, then controlling the transfer dispatching mechanism to take out the sample rack corresponding to the retest instruction in the buffer region in the direction same as or opposite to the first direction and then dispatch the sample rack to the feeding channel in the second direction, so as to move to the sample aspiration position in the direction opposite to the first direction along the feeding channel for sample aspiration.

13. The method of any one of claims 10 to 12, wherein the retest step (150) comprises a first emergency step:
in response to an emergency instruction inputted by a user, controlling a sample rack located within an emergency region to move from the emergency region to the buffer region in communication with the emergency region in a direction same as or opposite to the first direction;
controlling the sample rack to move out of the buffer region in a direction same as or opposite to the first direction;
controlling the sample rack, which moves out of the buffer region, to move in the second direction; and
controlling the sample rack to move into the feeding channel and to move to the sample aspiration position along the feeding channel in a direction opposite to the first direction for sample aspiration.

14. The method of any one of claims 10 to 12, wherein the retest step (150) comprises a second emergency step:
in response to an emergency instruction inputted by a user, controlling a sample rack at an emergency position in the buffer region to move out of the buffer region in a direction same as or opposite to the first direction;
controlling the sample rack, which moves out of the buffer region, to move in the second direction; and
controlling the sample rack to move into the feeding channel and to move to the sample aspiration position along the feeding channel in a direction opposite to the first direction for sample aspiration.

## Patentansprüche

1. Eine automatische Probenzuführungsvorrichtung, wobei diese Folgendes umfasst:
einen Zuführkanal (10), der in einer ersten Richtung vorgesehen und so konfiguriert ist, dass er einen Probenträger stützt, wobei der Zuführkanal (10) mit einem hin- und hergehenden Zuführmechanismus (11) versehen ist, der so konfiguriert ist, dass er den Probenträger in dem Zuführkanal (10) entlang einer Längsrichtung desselben bewegt; wobei der Zuführkanal (10) ferner mit einer Probenansaugposition (10a) zum Ansaugen einer Probe in dem Probenträger versehen ist;
einen Ladebereich (20), der mit dem Zuführkanal (10) in Verbindung steht und so konfiguriert ist, dass er den Probenträger in seiner Längsrichtung entlang der ersten Richtung trägt und in einer zweiten Richtung zum Zuführkanal (10) hin bewegt;
mindestens einen Pufferbereich (30), der so konfiguriert ist, dass er den Probenträger nach dem Ansaugen der Probe stützt und/oder ein Probenträger stützt, der eine Notfallprobe aufbewahrt; und
einen Übertragungs- Sendemechanismus (50), der so konfiguriert ist, dass er den Probenträger zwischen dem mindestens einen Pufferbereich (30) und dem Zuführkanal (10) abfertigt, wobei der Übertragungs- Sendemechanismus (50) so konfiguriert ist, dass er: den Probenträger nach der Probenentnahme aus dem Zuführkanal (10) in den mindestens einen Pufferbereich (30) bewegt, um auf ein Testergebnis zu warten; einen Probenträger in dem mindestens einen Pufferbereich (30) aus dem mindestens einen Pufferbereich (30) in den Zuführkanal (10) bewegt, wenn die Probe in dem Probenträger erneut getestet werden muss; oder ein Probenträger, der einer Notfallanweisung in dem mindestens einen Pufferbereich (30) entspricht, aus dem mindestens einen Pufferbereich (30) in den Zuführkanal (10) bewegt, wenn die von einem Benutzer eingegebene Notfallanweisung empfangen wird,
wobei die Probenansaugposition (10a) des Zuführkanals (10) an einer Position zwischen dem Ladebereich (20) und dem mindestens einen Pufferbereich (30) angeordnet ist; und der hin- und hergehende Zuführmechanismus (11) konfiguriert ist, um: den Probenträger, das sich von dem Ladebereich (20) in den Zuführkanal (10) bewegt, anzutreiben, um sich zu der Probenansaugposition (10a) in der ersten Richtung zu bewegen; und der Probenträger, der durch den Übertragungs- Sendemechanismus (50) aus dem mindestens einen Pufferbereich (30) in den Zuführkanal (10) herausgenommen wird, anzutreiben, um sich zu der Probenansaugposition (10a) zu bewegen. Ansaugposition (10a) in einer der ersten Richtung entgegengesetzten Richtung, um den Probenträger auf dem Zuführkanal (10) bidirektional zu fördern.

2. Automatische Probenzuführungsvorrichtung nach Anspruch 1, wobei der mindestens eine Pufferbereich (30) mindestens zwei parallel angeordnete Pufferbereiche (30) aufweist, und die mindestens zwei Pufferbereiche (30) vorzugsweise in der ersten Richtung parallel angeordnet sind.

3. Automatische Probenzuführungsvorrichtung nach Anspruch 2, wobei der mindestens eine Pufferbereich (30) zwei Pufferbereiche aufweist, die beiden Pufferbereiche (30) durch einen Zwischenbereich (32) voneinander getrennt sind und achsensymmetrisch in Bezug auf den Zwischenbereich (32) als Symmetrieachse vorgesehen sind, und eine Länge des Zwischenbereichs (32) in der ersten Richtung mindestens einer Länge des Probenträgers entspricht, wobei der Übertragungs- Sendemechanismus (50) ferner so ausgelegt ist, dass er: den Probenträger in jedem der beiden Pufferbereiche (30) vollständig in den Zwischenbereich (32) in einer Richtung bewegt, die gleich oder entgegengesetzt zu der ersten Richtung ist; und den Probenträger in dem Zwischenbereich (32) in der zweiten Richtung bewegt.

4. Automatische Probenzuführungsvorrichtung nach einem der Ansprüche 1 bis 3, wobei der Übertragungs- Sendemechanismus (50) ferner so konfiguriert ist, dass er den Probenträger von dem mindestens einen Pufferbereich (30) zu dem Zuführungskanal (10) mindestens in der zweiten Richtung bewegt und den Probenträger von dem Zuführkanal (10) zu dem mindestens einen Pufferbereich (30) mindestens in einer der zweiten Richtung entgegengesetzten Richtung bewegt.

5. Automatische Probenzuführungsvorrichtung nach einem der Ansprüche 1 bis 4, wobei diese ferner einen Notfallbereich (40) aufweist, der so ausgelegt ist, dass der Benutzer einen Probenträger platzieren kann, das eine Notfallprobe trägt, wobei der Notfallbereich (40) zumindest mit einem der mindestens einen Pufferbereiche (30) in Verbindung steht und so konfiguriert ist, dass er den Probenträger von dem Notfallbereich (40) zu dem mindestens einen Pufferbereich (30) in Verbindung mit dem Notfallbereich (40) bewegt.

6. Automatische Probenzuführungsvorrichtung nach einem der Ansprüche 1 bis 5, wobei sich der Ladebereich (20) und der mindestens eine Pufferbereich (30) auf derselben Seite des Zuführkanals (10) befinden.

7. Automatische Probenzuführungsvorrichtung nach einem der Ansprüche 1 bis 6, wobei diese ferner einen Entladekanal (60) und einen Entladebereich (70) umfasst;
wobei der Entladebereich (70) so konfiguriert ist, dass er den Probenträger mit seiner Längsrichtung entlang der ersten Richtung trägt und den Probenträger in einer Richtung entgegengesetzt zur zweiten Richtung bewegt;
wobei der Entladekanal (60) in der ersten Richtung vorgesehen und so konfiguriert ist, dass er den Probenträger mit seiner Längsrichtung entlang der ersten Richtung stützt und diesen von dem Entladekanal (60) zu dem Entladebereich (70) in einer Richtung entgegengesetzt zur zweiten Richtung bewegt; und
wobei der Entladebereich (70), der mindestens eine Pufferbereich (30) und der Ladebereich (20) alle auf derselben Seite des Zuführkanals (10) angeordnet sind.

8. Automatische Probenzuführungsvorrichtung nach einem der Ansprüche 1 bis 7, wobei der Ladebereich (20), der mindestens eine Pufferbereich (30) und der Entladebereich (70) nacheinander in der ersten Richtung vorgesehen sind.

9. Probenanalysesystem, das Folgendes umfasst: eine automatische Probenzuführungsvorrichtung nach einem der Ansprüche 1 bis 8 und einen Analysator zum Ansaugen einer Probe aus einem von der automatischen Probenzuführungsvorrichtung zugeführten Probenträger und zur Durchführung der Analyse,
wobei die automatische Probenzuführungsvorrichtung auf einer Seite des Analysators vorgesehen ist und die erste Richtung mit einer Längsrichtung des Analysators übereinstimmt; und der Ladebereich (20) und der mindestens eine Pufferbereich (30) auf einer ersten Seite des Zuführkanals (10) angeordnet sind bzw. der Analysator auf einer zweiten Seite gegenüber der ersten Seite der automatischen Probenzuführungsvorrichtung angeordnet ist.

10. Verfahren zur automatischen Steuerung der Probenzufuhr, wobei das Verfahren Folgendes umfasst:
einen Schritt (100) zum Platzieren eines Probenträgers: Steuern einer Bewegung eines Probenträgers von einem Ladebereich zu einem Zuführkanal in einer zweiten Richtung;
einen Zuführungsschritt des Probenträgers (120): Steuern des Probenträgers, um ihn in einer ersten Richtung entlang des Zuführungskanals zu einer Probenansaugposition zu bewegen, die sich auf dem Zuführungskanal zum Ansaugen der Probe befindet;
einen Pufferschritt des Probenträgers (140): Steuern eines Übertragungs-Sendemechanismus, um den Probenträger, der sich nach dem Ansaugen der Probe aus dem Zuführkanal herausbewegt, in einen Pufferbereich in einer Richtung entgegengesetzt zur zweiten Richtung zu bewegen, und Antreiben des Probenträgers, sich in den Pufferbereich in einer Richtung zu bewegen, die gleich oder entgegengesetzt zur ersten Richtung ist, um auf ein Testergebnis zu warten; und
einen Wiederholungsprüfungsschritt (150): wenn das Testergebnis einer Probe anzeigt, dass die Probe erneut geprüft werden muss, Steuern des Übertragungs- Sendemechanismus, um den Probenträger entsprechend einer Wiederholungsprüfungsanweisung in dem Pufferbereich in einer Richtung entgegengesetzt oder gleich der ersten Richtung herauszunehmen und dann den Probenträger in der zweiten Richtung zu dem Zuführkanal zu befördern, und Bewegen des Probenträgers zu der Probenansaugposition in einer Richtung entgegengesetzt zu der ersten Richtung entlang des Zuführkanals für das Ansaugen der Probe, um den Probenträger bidirektional auf dem Zuführkanal zu befördern.

11. Verfahren nach Anspruch 10, wobei der Wiederholungsprüfungsschritt (150) ferner Folgendes umfasst:
wenn das Testergebnis der Probe anzeigt, dass die Probe wieder geprüft wird, ein Probenträger das sich an der Probenansaugposition befindet, so gesteuert wird, dass es sich entlang des Zuführkanals herausbewegt, dann der Transferabfertigungsmechanismus so gesteuert wird, dass er den Probenträger, das dem Wiederholungsprüfungsbefehl entspricht, im Pufferbereich in der gleichen Richtung wie oder entgegengesetzt zur ersten Richtung herausnimmt und dann den Probenträger in einer Richtung entgegengesetzt zur zweiten Richtung zum Zuführkanal sendet, so dass es sich zur Probenansaugposition in der Richtung entgegengesetzt zur ersten Richtung entlang des Zuführkanals zum Ansaugen der Probe bewegt.

12. Verfahren nach Anspruch 10, wobei der Wiederholungsprüfungsschritt (150) ferner Folgendes umfasst:
wenn das Testergebnis der Probe anzeigt, dass die Probe erneut geprüft wird, ein an der Probenansaugposition befindlicher Probenträger so gesteuert wird, dass er sich entlang des Zuführkanals in einer der ersten Richtung entgegengesetzten Richtung herausbewegt, und dann der Übertragungs- Sendemechanismus so gesteuert wird, dass er den Probenträger entsprechend der Wiederholungsanweisung im Pufferbereich in der gleichen Richtung wie oder entgegengesetzt zur ersten Richtung herausnimmt und dann in der zweiten Richtung zum Zuführkanal befördert, um sich in der Richtung entgegengesetzt zur ersten Richtung entlang des Zuführkanals zum Ansaugen der Probe zur Probenentnahmeposition zu bewegen.

13. Verfahren nach einem der Ansprüche 10 bis 12, wobei der Wiederholungsprüfungsschritt (150) einen ersten Notfallschritt umfasst:
als Reaktion auf einen von einem Benutzer eingegebenen Notfallbefehl, zur Steuerung eines Probenträgers, das sich in einem Notfallbereich befindet, um sich aus dem Notfallbereich in den Pufferbereich, der mit dem Notfallbereich in Verbindung steht, in einer Richtung zu bewegen, die gleich oder entgegengesetzt zu der ersten Richtung ist;
Steuerung des Probenträgers, damit es sich aus dem Pufferbereich in eine Richtung bewegt, die gleich oder entgegengesetzt zur ersten Richtung ist;
Steuerung des Probenträgers, der sich aus dem Pufferbereich herausbewegt, um sich in die zweite Richtung zu bewegen; und
Steuerung der Bewegung des Probenträgers in den Zuführkanal und der Bewegung zur Probenansaugposition entlang des Zuführkanals in einer Richtung, die der ersten Richtung für das Ansaugen der Probe entgegengesetzt ist.

14. Verfahren nach einem der Ansprüche 10 bis 12, wobei der Wiederholungsprüfungsschritt (150) einen zweiten Notfallschritt umfasst:
als Reaktion auf einen von einem Benutzer eingegebenen Notfallbefehl, zur Steuerung eines Probenträgers an einer Notfallposition im Pufferbereich, um sich aus dem Pufferbereich in eine Richtung zu bewegen, die gleich oder entgegengesetzt zu der ersten Richtung ist;
Steuerung des Probenträgers, der sich aus dem Pufferbereich herausbewegt, um sich in die zweite Richtung zu bewegen; und
Steuerung der Bewegung des Probenträgers in den Zuführkanal und der Bewegung zur Probenansaugposition entlang des Zuführkanals in einer Richtung, die der ersten Richtung für das Ansaugen der Probe entgegengesetzt ist.

## Revendications

1. Dispositif d'alimentation automatique d'échantillon, où le dispositif d'alimentation automatique d'échantillon comprend :
un canal d'alimentation (10) prévu suivant une première direction et configuré pour supporter un portoir d'échantillons, où le canal d'alimentation (10) est doté d'un mécanisme d'alimentation en va-et-vient (11) configuré pour déplacer le portoir d'échantillons dans le canal d'alimentation (10) le long d'une direction de longueur de celui-ci ; où le canal d'alimentation (10) est en outre doté d'une position d'aspiration d'échantillon (10a) destinée à aspirer un échantillon se trouvant dans le portoir d'échantillons ;
une zone de chargement (20) en communication avec le canal d'alimentation (10) et configurée pour supporter le portoir d'échantillons avec sa direction de longueur le long de la première direction et pour déplacer le portoir d'échantillons vers le canal d'alimentation (10) suivant une seconde direction ;
au moins une zone tampon (30) configurée pour supporter le portoir d'échantillons après aspiration d'échantillon, et/ou pour supporter un portoir d'échantillons contenant un échantillon d'urgence ; et
un mécanisme d'aiguillage de transfert (50) configuré pour diriger le portoir d'échantillons entre la au moins une zone tampon (30) et le canal d'alimentation (10), où le mécanisme d'aiguillage de transfert (50) est configuré pour : déplacer le portoir d'échantillons après aspiration d'échantillon du canal d'alimentation (10) jusque dans la au moins une zone tampon (30) dans l'attente d'un résultat d'essai ; déplacer un portoir d'échantillons situé dans la au moins une zone tampon (30) de la au moins une zone tampon (30) jusque dans le canal d'alimentation (10) lorsque l'échantillon se trouvant dans le portoir d'échantillons nécessite d'être à nouveau soumis à essai ; ou déplacer un portoir d'échantillons correspondant à une instruction d'urgence situé dans la au moins une zone tampon (30) de la au moins une zone tampon (30) jusque dans le canal d'alimentation (10) lorsque l'instruction d'urgence entrée par un utilisateur est reçue,
où la position d'aspiration d'échantillon (10a) du canal d'alimentation (10) est située à une position entre la zone de chargement (20) et la au moins une zone tampon (30) ; et le mécanisme d'alimentation en va-et-vient (11) est configuré pour: entraîner le portoir d'échantillons, lequel se déplace de la zone de chargement (20) jusque dans le canal d'alimentation (10), pour le déplacer jusqu'à la position d'aspiration d'échantillon (10a) suivant la première direction ; et entraîner le portoir d'échantillons, lequel est sorti par le mécanisme d'aiguillage de transfert (50) de la au moins une zone tampon (30) jusque dans le canal d'alimentation (10), pour le déplacer jusqu'à la position d'aspiration d'échantillon (10a) suivant une direction opposée à la première direction, permettant de transporter de manière bidirectionnelle le portoir d'échantillons sur le canal d'alimentation (10).

2. Dispositif d'alimentation automatique d'échantillon selon la revendication 1, dans lequel la au moins une zone tampon (30) comprend au moins deux zones tampon (30) prévues en parallèle, et les au moins deux zones tampon (30) sont de préférence prévues en parallèle suivant la première direction.

3. Dispositif d'alimentation automatique d'échantillon selon la revendication 2, dans lequel la au moins une zone tampon (30) comprend deux zones tampon, les deux zones tampon (30) sont prévues en étant séparées par une zone intermédiaire (32) et sont symétriquement prévues par rapport à la zone intermédiaire (32) comme axe de symétrie, et une longueur de la zone intermédiaire (32) suivant la première direction est égale à au moins une longueur du portoir d'échantillons, le mécanisme d'aiguillage de transfert (50) est en outre configuré pour : déplacer complètement le portoir d'échantillons situé dans l'une ou l'autre des deux zones tampon (30) jusque dans la zone intermédiaire (32) suivant une direction identique ou opposée à la première direction ; et déplacer le portoir d'échantillons situé dans la zone intermédiaire (32) suivant la seconde direction.

4. Dispositif d'alimentation automatique d'échantillon selon l'une quelconque des revendications 1 à 3, dans lequel le mécanisme d'aiguillage de transfert (50) est en outre configuré pour déplacer le portoir d'échantillons de la au moins une zone tampon (30) jusqu'au canal d'alimentation (10) au moins suivant la seconde direction, et pour déplacer le portoir d'échantillons du canal d'alimentation (10) jusqu'à la au moins une zone tampon (30) au moins suivant une direction opposée à la seconde direction.

5. Dispositif d'alimentation automatique d'échantillon selon l'une quelconque des revendications 1 à 4, où le dispositif d'alimentation automatique d'échantillon comprend en outre une zone d'urgence (40) configurée pour permettre à l'utilisateur de positionner un portoir d'échantillons contenant un échantillon d'urgence, où la zone d'urgence (40) est au moins en communication avec une de la au moins une zone tampon (30) et est configurée pour déplacer le portoir d'échantillons de la zone d'urgence (40) jusqu'à la au moins une zone tampon (30) en communication avec la zone d'urgence (40).

6. Dispositif d'alimentation automatique d'échantillon selon l'une quelconque des revendications 1 à 5, dans lequel la zone de chargement (20) et la au moins une zone tampon (30) sont situées d'un même côté du canal d'alimentation (10).

7. Dispositif d'alimentation automatique d'échantillon selon l'une quelconque des revendications 1 à 6, , où le dispositif d'alimentation automatique d'échantillon comprend en outre un canal de déchargement (60) et une zone de déchargement (70) ;
où la zone de déchargement (70) est configurée pour supporter le portoir d'échantillons avec sa direction de longueur le long de la première direction et pour déplacer le portoir d'échantillons suivant une direction opposée à la seconde direction ;
où le canal de déchargement (60) est prévu suivant la première direction et configuré pour supporter le portoir d'échantillons avec sa direction de longueur le long de la première direction et pour déplacer le portoir d'échantillons du canal de déchargement (60) jusqu'à la zone de déchargement (70) suivant une direction opposée à la seconde direction ; et
où la zone de déchargement (70), la au moins une zone tampon (30) et la zone de déchargement (20) sont toutes situées d'un même côté du canal d'alimentation (10).

8. Dispositif d'alimentation automatique d'échantillon selon l'une quelconque des revendications 1 à 7, dans lequel la zone de chargement (20), la au moins une zone tampon (30), et la zone de déchargement (70) sont prévues successivement suivant la première direction.

9. Système d'analyse d'échantillon, où le système d'analyse d'échantillon comprend :
un dispositif d'alimentation automatique d'échantillon selon l'une quelconque des revendications 1 à 8, et un analyseur destiné à aspirer un échantillon d'un portoir d'échantillons fourni par le dispositif d'alimentation automatique d'échantillon et à réaliser une analyse,
où le dispositif d'alimentation automatique d'échantillon est prévu d'un premier côté de l'analyseur, et la première direction correspond à une direction de longueur de l'analyseur ; et la zone de chargement (20) et la au moins une zone tampon (30) sont situées d'un premier côté du canal d'alimentation (10), et l'analyseur est situé sur un second côté opposé au premier côté du dispositif d'alimentation automatique d'échantillon.

10. Procédé de commande d'alimentation automatique d'échantillon, où le procédé comprend :
une étape de positionnement de portoir d'échantillons (100) : commander un portoir d'échantillons pour le déplacer d'une zone de chargement jusqu'à un canal d'alimentation suivant une seconde direction ;
une étape d'alimentation de portoir d'échantillons (120) : commander le portoir d'échantillons pour le déplacer suivant une première direction le long du canal d'alimentation jusqu'à une position d'aspiration d'échantillon située sur le canal d'alimentation pour une aspiration d'échantillon ;
une étape de mise en zone tampon de portoir d'échantillons (140) : commander un mécanisme d'aiguillage de transfert pour déplacer le portoir d'échantillons, lequel sort du canal d'alimentation après l'aspiration d'échantillon, jusqu'à une zone tampon suivant une direction opposée à la seconde direction, et entraîner le portoir d'échantillons pour le déplacer jusque dans la zone tampon suivant une direction identique ou opposée à la première direction dans l'attente d'un résultat d'essai ; et
une étape de resoumission à essai (150) : lorsque le résultat d'essai d'un échantillon indique que l'échantillon nécessite d'être à nouveau soumis à essai, commander le mécanisme d'aiguillage de transfert pour sortir le portoir d'échantillons correspondant à une instruction de resoumission à essai situé dans la zone tampon suivant une direction opposée ou identique à la première direction et ensuite diriger le portoir d'échantillons vers le canal d'alimentation suivant la seconde direction, et déplacer le portoir d'échantillons jusqu'à la position d'aspiration d'échantillon suivant une direction opposée à la première direction le long du canal d'alimentation pour aspiration d'échantillon, permettant de transporter de manière bidirectionnelle le portoir d'échantillons sur le canal d'alimentation.

11. Procédé selon la revendication 10, dans lequel l'étape de resoumission à essai (150) comprend en outre :
lorsque le résultat d'essai de l'échantillon indique que l'échantillon nécessite d'être à nouveau soumis à essai, commander un portoir d'échantillons situé à la position d'aspiration d'échantillon pour le déplacer le long du canal d'alimentation afin de l'en sortir, puis commander le mécanisme d'aiguillage de transfert pour sortir le portoir d'échantillons correspondant l'instruction de resoumission à essai situé dans la zone tampon suivant la direction identique ou opposée à la première direction et ensuite diriger le portoir d'échantillons vers le canal d'alimentation suivant une direction opposée à la seconde direction, de sorte à le déplacer jusqu'à la position d'aspiration d'échantillon suivant la direction opposée à la première direction le long du canal d'alimentation pour une aspiration d'échantillon.

12. Procédé selon la revendication 10, dans lequel l'étape de resoumission à essai (150) comprend en outre :
lorsque le résultat d'essai de l'échantillon indique que l'échantillon nécessite d'être à nouveau soumis à essai, commander un portoir d'échantillons situé à la position d'aspiration d'échantillon pour le déplacer le long du canal d'alimentation suivant une direction opposée à la première direction afin de l'en sortir, puis commander le mécanisme d'aiguillage de transfert pour sortir le portoir d'échantillons correspondant l'instruction de resoumission à essai situé dans la zone tampon suivant la direction identique ou opposée à la première direction et ensuite diriger le portoir d'échantillons vers le canal d'alimentation suivant la seconde direction, de sorte à le déplacer jusqu'à la position d'aspiration d'échantillon suivant la direction opposée à la première direction le long du canal d'alimentation pour une aspiration d'échantillon.

13. Procédé selon l'une quelconque des revendications 10 à 12, dans lequel l'étape de resoumission à essai (150) comprend une première étape d'urgence :
en réponse à une instruction d'urgence entrée par un utilisateur, commander un portoir d'échantillons situé dans une zone d'urgence pour le déplacer de la zone d'urgence jusqu'à la zone tampon en communication avec la zone d'urgence suivant une direction identique ou opposée à la première direction ;
commander le portoir d'échantillons pour le sortir de la zone tampon suivant une direction identique ou opposée à la première direction ;
commander le portoir d'échantillons, lequel sort de la zone tampon, pour le déplacer suivant la seconde direction ; et
commander le portoir d'échantillons pour le déplacer jusque dans le canal d'alimentation et pour le déplacer jusqu'à la position d'aspiration d'échantillon le long du canal d'alimentation suivant une direction opposée à la première direction pour une aspiration d'échantillon.

14. Procédé selon l'une quelconque des revendications 10 à 12, dans lequel l'étape de resoumission à essai (150) comprend une seconde étape d'urgence :
en réponse à une instruction d'urgence entrée par un utilisateur, commander un portoir d'échantillons situé à une position d'urgence dans la zone tampon pour le sortir de la zone tampon suivant une direction identique ou opposée à la première direction ;
commander le portoir d'échantillons, lequel sort de la zone tampon, pour le déplacer suivant la seconde direction ; et
commander le portoir d'échantillons pour le déplacer jusque dans le canal d'alimentation et pour le déplacer jusqu'à la position d'aspiration d'échantillon le long du canal d'alimentation suivant une direction opposée à la première direction pour une aspiration d'échantillon.
